# EUROPÄISCHE PATENTSCHRIFT

(11) **EP 3 053 437 B1**
(45) Veröffentlichungstag und Bekanntmachung des Hinweises auf die Patenterteilung: **20.09.2017**
(21) Anmeldenummer: 16401008.4
(22) Anmeldetag: 01.02.2016
(51) Int. Cl.: A01M 7/00

(54) **VERTEILERGESTÄNGE**
SPRAY BOOM
RAMPE DE DISTRIBUTION

(30) Priorität: 03.02.2015 DE 102015101492
(43) Veröffentlichungstag der Anmeldung: 10.08.2016
(73) Patentinhaber: Amazonen-Werke H. Dreyer GmbH & Co. KG, 49205 Hasbergen (DE)
(72) Erfinder: Oberheide, Friedrich, 49143 Bissendorf (DE); Kowallik, Daniel, 47443 Moers (DE)

(56) Entgegenhaltungen:
- WO-A1-2004/089077
- FR-A1- 2 880 516
- US-A- 6 119 963
- US-B1- 6 293 475

## Beschreibung

Die Erfindung betrifft ein Verteilergestänge gemäß des Oberbegriffes des Patentanspruches 1.

Ein derartiges Verteilergestänge ist in EP 1 615 496 A1 beschrieben. Dieses Verteilergestänge für eine landwirtschaftliche Verteilmaschine besteht aus mehreren zueinander in Transportstellung einklappbaren und in Arbeitsstellung aus klappbaren Gestängeabschnitten. Das Verteilergestänge erstreckt sich quer zur Fahrtrichtung und kann Arbeitsbreiten von bis zu 24 m und mehr aufweisen. Der jeweils äußere Endabschnitt ist mittels Ausweichgelenken und um aufrechte Achsen gegen eine nachgebende Federkraft erzeugende Federeinrichtung in auf die Fahrtrichtung bezogene Vorwärts- und/oder Rückwärtsrichtung beim Auftreffen auf Hindernissen ausweichbar angeordnet. Durch einen jeweils zwischen dem jeweiligen Endabschnitt und dem inneren benachbarten Gestängeabschnitt des Verteilergestänges angeordneten Hydraulikzylinder wird der jeweilige Endabschnitt des Verteilergestänges in Arbeitsposition gehalten. Dieser Hydraulikzylinder ist so ausgestaltet, dass bei einem Auftreffen des Endabschnittes auf Hindernissen, dieser ohne Beschädigung ausweichen kann. Der Hydraulikzylinder ist üblicherweise mit dem aus dem Zylinderrohr herausragenden Kolbenende und mit seinem bodenseitigen Ende des Zylinderrohres zwischen dem Endabschnitt und dem inneren benachbarten Gestängeabschnitt angeordnet. Derartige Standard-Hydraulikzylinder sind relativ schwer, welches beim Einbau in den äußeren Bereichen des Verteilergestänges nachteilig ist.

Der Erfindung liegt die Aufgabe zu Grunde, einen einfacher ausgestalteten Hydraulikzylinder für die Anordnung bei Ausweichgelenken eines Verteilergestänges zu schaffen.

Diese Aufgabe der erfindungsgemäß dadurch gelöst, dass die Kolbenstange mit dem Endabschnitt des Gestänges oder dem benachbarten innen liegenden Gestängeabschnitt über ein Zwischenglied in Wirkverbindung steht, dass das Zwischenglied beweglich mit der Kolbenstange in Verbindung steht.

Infolge dieser Maßnahme ergibt sich ein sehr einfacher und leicht ausgestalteter Hydraulikzylinder mit einem einfach in das jeweilige Ausweichgelenk zu integrierenden Hydraulikzylinder, der den Endabschnitt zu dem inneren benachbarten Gestängeabschnitt in Arbeitsposition hält und ein Ausweichen des Endabschnittes beim Auftreffen auf Hindernissen gestattet. Darüber hinaus wird die Grundvoraussetzung dafür geschaffen, dass der Zylinder leicht austauschbar in dem Ausweichgelenk angeordnet werden kann. Um in einfacher Weise die Ausweichbewegungen des Endabschnittes des Verteilergestänges zu ermöglichen, ist die Kolbenstange mit einer halbkugelförmigen Halbschale versehen, in welcher das als Druckstab ausgebildete Zwischenglied angeordnet ist, und in beweglicher Weise mit der Kolbenstange in Verbindung steht. Hierdurch wird auf eine einfache Art eine günstige Umsetzung der Kraftübertragung zwischen den Gestängeabschnitten ermöglicht. In vorteilhafter Weise ist die Aufnahme des Zwischengliedes in der Kolbenstange in etwa in der Mitte der Kolbenstange angeordnet, so dass Seitenkräfte reduziert und der Druckstab nicht aus der Führung heraus gelangen kann.

Um in einfacher Weise die vorbeschriebenen Vorteile zur Anordnung des Zwischengliedes im Hinblick auf die Kolbenstange zu erreichen, ist vorgesehen, dass an dem freien Ende der Kolbenstange in der Kolbenstange eine zumindest annähernd fluchtend in Richtung der Mittellinie der Kolbenstange ausgerichtete Sacklochbohrung angeordnet ist, dass in die Sacklochbohrung das Zwischenglied eingreift.

Eine einfache Ausgestaltung des Zwischengliedes wird dadurch erreicht, dass das Zwischenglied stabförmig ausgebildet ist.

Um eine begrenzte Beweglichkeit des Zwischengliedes in der Sacklochbohrung zu gewährleisten, ist vorgesehen, dass die Sacklochbohrung einen Durchmesser, der größer als zumindest das 1,25 fache, vorzugsweise zumindest das 1,5 fache des Durchmessers des stabförmigen Zwischengliedes ist, aufweist.

Damit eine sichere Anordnung des Zwischengliedes in dem Sackloch gegeben ist, ist vorgesehen, dass das Sackloch eine Tiefe, die zumindest das Zweifache des Durchmessers des Zwischengliedes beträgt, aufweist.

Eine einfache Ausgestaltung und Anordnung der Verbindung des stabförmigen Zwischengliedes, welches dem Hydraulikzylinder zugeordnet ist, im Bereich des Ausweichgelenke lässt sich dadurch gewährleisten, dass das stabförmige Zwischenglied auf der der Kolbenstange abgewandten Seite mittels einer Gelenkanordnung mit dem jeweiligen Endabschnitt des Gestänges und dem jeweiligen benachbarten innen liegenden Gestängeabschnitt verbunden ist.

Eine einfache Anordnung des Hydraulikzylinders an einem der Abschnitte des Verteilergestänges lässt sich dadurch erreichen, dass der jeweilige Endabschnitt des Gestänges oder der jeweilige benachbarte innen liegende Gestängeabschnitt einen über eine Verbindungssäule miteinander verbundenen Unter- und Obergurt aufweist, dass in der Verbindungssäule ein Durchbruch angeordnet ist, dass in dem Durchbruch ein mit der Verbindungssäule fest verbundenes Rohrstück angeordnet ist, dass in das Rohrstück das Zylinderrohr des Hydraulikzylinders gesteckt und mit einem an dem Zylinderrohr des Hydraulikzylinders angeordneten Ansatzelement an dem einen Ende des Rohrstückes anliegt.

Weitere Einzelheiten der Erfindung sind der Beispielsbeschreibung und den Zeichnungen zu entnehmen. Die Zeichnungen zeigen
- Fig.1: das Verteilergestänge einer als Pflanzenschutzspritze ausgebildeten landwirtschaftlichen Verteilmaschine in der Ansicht von hinten und in Prinzipdarstellung,
- Fig.2: das in Fahrtrichtung gesehen rechte Ausweichgelenk zwischen dem Endabschnitt und dem benachbarten innen liegenden Gestängeabschnitt in Arbeitsposition,
- Fig.3: das Ausweichgelenk gemäß Fig.2 in perspektivischer Darstellung,
- Fig.4: das Ausweichgelenk gemäß Fig.2 in Draufsicht,
- Fig.5: das Ausweichgelenk gemäß Fig.2 in perspektivischer Darstellung, jedoch in Ausweichstellung nach vorn, wenn sich im Bereich des Endabschnittes beim Rückwärtsfahren ein Hindernis befindet,
- Fig.6: das Ausweichgelenk gemäß Fig.5 in Draufsicht,
- Fig.7: das Ausweichgelenk gemäß Fig.2 in perspektivischer Darstellung, jedoch in Ausweichstellung nach oben, wenn der äußere Bereich des Endabschnittes Bodenberührung bekommt,
- Fig.8: das Ausweichgelenk gemäß Fig.7 in der Ansicht von hinten und
- Fig.9: das Ausweichgelenk gemäß Fig.7 in der Draufsicht,
- Fig.10: das geschlossene ringförmige Element des komplementären Gelenkelementes in perspektivischer Darstellung,

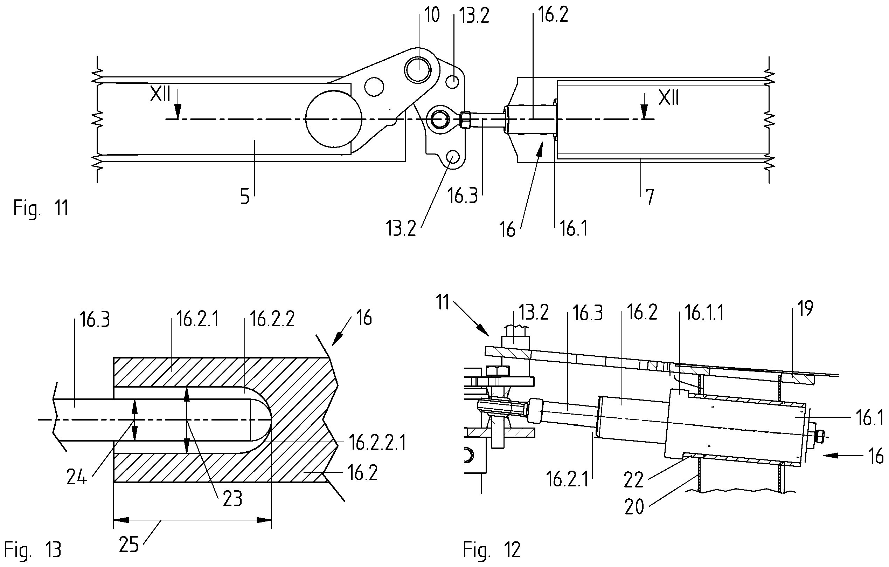

- Fig.11: das Ausweichgelenk in der Ansicht gemäß Fig.2, wobei das geschlossene ringförmige Element Gelenkelemente des Ausweichgelenkes ausgeblendet ist,
- Fig.12: die Anordnung des Hydraulikzylinders in dem Ausweichgelenk nach Fig.11 in der Ansicht XII - XII und
- Fig.13: die Anordnung des Zwischengliedes in der Sachlochbohrung der Kolbenstange in der Ansicht gemäß Fig.12 in Teilansicht und vergrößertem Maßstab.

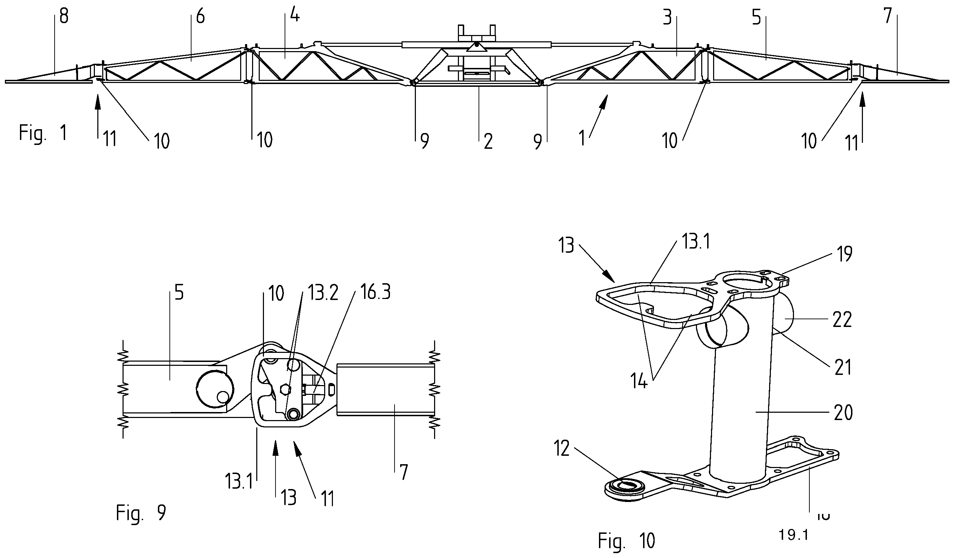

Das Verteilergestänge 1 einer als Pflanzenschutzspritze ausgebildeten landwirtschaftlichen Verteilmaschinen weist die mehreren zueinander in Transportstellung einklappbaren und in Arbeitsstellung, wie in Fig.1 dargestellt ist, und ausklappbaren Gestängeabschnitte 2, 3, 4, 5, 6, 7, 8 auf. Die Gestängeabschnitten 2, 3, 4, 5, 6, 7, 8 sind mittels Gelenken 9, 10 jeweils miteinander verbunden. Auf jeder Seite des Verteilergestänges 1 ist ein Endabschnitt 7, 8 angeordnet, welches jeweils zusätzlich mittels eines Ausweichgelenkes 11 am inneren benachbarten Gestängeabschnitt 5, 6 des Verteilergestänges 1, bezogen auf die Fahrtrichtung in Vorwärts- und/oder Rückwärtsrichtung beim Auftreffen auf Hindernissen ausweichbar angeordnet ist. Jedes Ausweichgelenk 11 weist zwei übereinander liegende Gelenkanordnungen 12, 13 auf. Im Ausführungsbeispiel ist die die untere Gelenkanordnung 12 als Kugelgelenk ausgebildet, während die obere Gelenkanordnung 13 jeweils zwei in Fahrtrichtung 15 zueinander beabstandete und auseinander bewegbare komplementäre Gelenkelemente 13 aufweist. Zwischen dem jeweiligen Endabschnitt 7, 8 und dem jeweils benachbarten inneren Gelenksabschnitt 5, 6 ist ein als Hydraulikzylinder 16 ausgebildetes eine nachgebende Federkraft erzeugende Federeinrichtung angeordnet. Durch diese Federeinrichtung werden der Endabschnitt 7, 8 und der jeweils benachbarte innere Gestängeabschnitt 5, 6 im Bereich der Gelenkanordnung 13 federnd zusammengezogen und zueinander gehalten. In vorteilhafterweise ist dem Hydraulikzylinder 16 ein nicht dargestellter Hydraulikspeicher zugeordnet, über den die durch den Hydraulikzylinder 16 ausgeübte und auf die Gestängeabschnitte 5, 6, 7, 8, einwirkende Federkraft erzeugt wird.

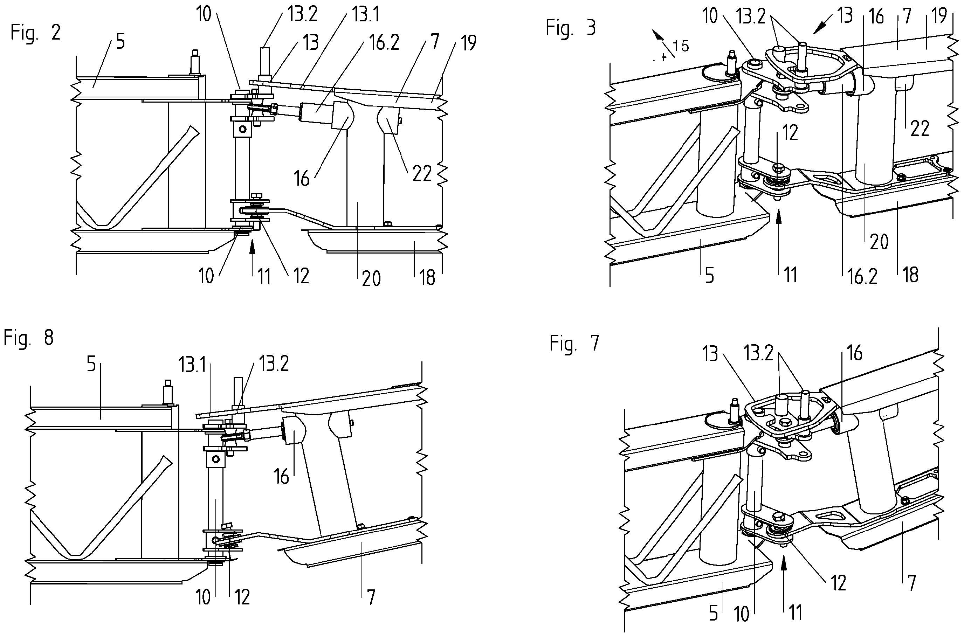

Das eine der komplementären Gelenkelemente 13 ist als geschlossenes ringförmiges Element 13.1 ausgebildet. Innerhalb dieses geschlossenen ringförmigen Elementes 13.1 sind zwei beabstandet zueinander angeordnete bolzen- und/oder stiftförmige Gelenkelemente 13.2 des komplementären Gelenkelementes 13 versetz- und/oder bewegbar angeordnet. Die die jeweilige Federkraft erzeugende Federeinrichtung, die von dem Hydraulikzylinder 16 gebildet wird, ist zwischen dem jeweiligen Endabschnitt 7, 8 und dem jeweiligen benachbarten innen liegenden Gestängeabschnitt 5, 6 angeordnet. Mittels dieser Federeinrichtung 16 werden die jeweiligen Endabschnitte 7, 8 ausweichbar gegenüber den innen liegenden Endabschnitten 5, 6 gehalten. Durch die von dem Hydraulikzylinder 16 gebildete Federeinrichtung werden die beabstandeten komplementären Gelenkelemente 13, 13.1, 13.2 in Anlage aneinander anliegend gehalten, wie die Fig.2-4 zeigen. Die Innenkontur des ringförmigen Elementes 13.1 ist herzförmig ausgebildet.

Durch die geschlossene ringförmige Ausgestaltung dieses Gelenkelementes 13.1 wird sichergestellt, dass die zugeordneten Gelenkelemente 13.2, die von bolzen- und/oder stiftförmigen Gelenkelementen gebildet werden, nicht aus dem ringförmig ausgebildeten Gelenkelemente 13.1 herausspringen können. Somit ist eine sichere zueinander Ordnung der komplementär ausgestalteten Gelenkelemente 13.1 und 13.2 der entsprechenden Gelenkanordnung 13 immer gewährleistet.

Die Innenkontur des ringförmigen Elementes 13.1 mit den zwei zueinander beabstandeten Führungsbahnen 14 verringert sich ausgehend von den beabstandeten Anlagebereichen der beabstandet zueinander angeordneten Gelenkelemente 13.2 in Nichtausweichposition nicht. Somit wird der Abstand in diesem Bereich der Führungsbahnen 14 ausgehend von den vorerwähnten Anlagebereichen nicht geringer. Diese Gelenkanordnung 13 ist nach dem Prinzip Gelenkbolzen 13.2 und Gelenkhülse 13.1, wobei die Gelenkhülse 13.1 entsprechend größer gegenüber dem Gelenkbolzen 13.2 ausgestattet ist, ausgebildet.

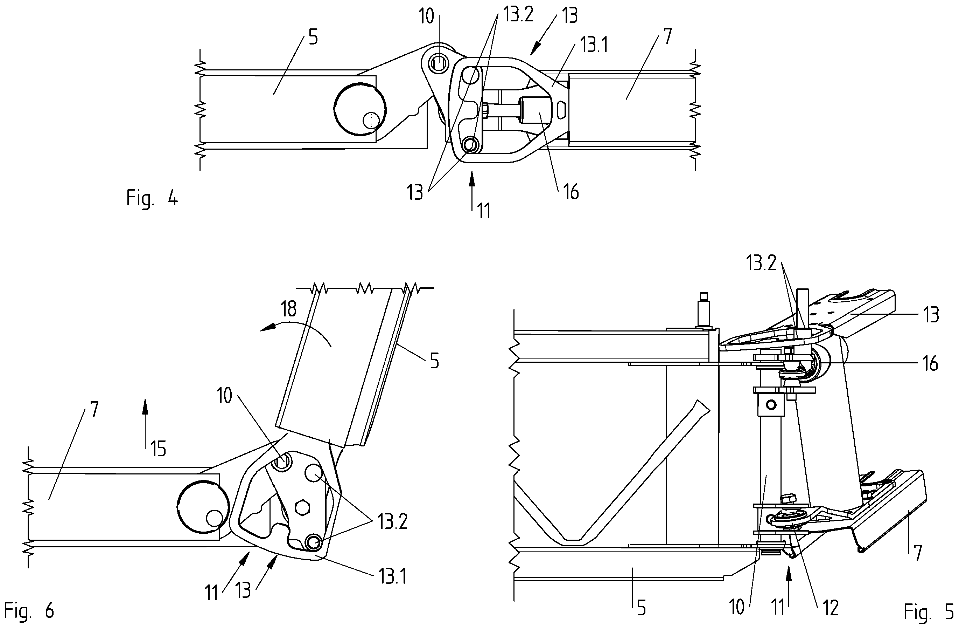

Die Funktionsweise der vorbeschriebenen erfindungsgemäßen Gelenkanordnung 11, 13 zwischen dem jeweiligen Endabschnitt 7, 8 und dem inneren benachbarten Gestängeabschnitt 5, ist Folgende:
Wenn sich, wie im Ausführungsbeispiel gemäß den Fig. 5 und 6 dargestellt, beim Rückwärtsfahren ein Hindernis im Bereich des Endabschnittes 7 des Verteilergestänges 1 befindet wird dieses nach vorn in Pfeilrichtung 18 gedrückt, so dass es in Vorwärtsrichtung, also entgegen der Rückwärtsfahrtrichtung und in Vorwärtsfahrtrichtung 15, ausweicht. Hierbei verschwenkt der Endabschnitt 7 um die Gelenkachse des Kugelgelenkes 12 und den hinteren Gelenkbolzen 13.2, wie die Fig.5 und 6 zeigen. Bei dieser Ausweichbewegung werden die hinteren Gelenkbolzen 13.2 und die hintere Ecke des ringförmigen Gelenkelementes 13.1 durch den Hydraulikzylinder 16 gegeneinander gedrückt. Nach dem Passieren des Hindernisses schwenkt der Endabschnitt 7 wieder in die in den Fig.2-4 dargestellte Position zurück, in welcher die beiden Gelenkbolzen 13.2 an den entsprechenden Stellen des ringförmigen Gelenkelementes 13.1 anliegen.

Gleiches geschieht in umgekehrter Weise, wenn bei Vorwärtsfahrt der Endabschnitt 7 des Verteilergestänges 1 nach hinten ausweicht, wenn sich im Bereich des Endabschnittes 7 ein Hindernis befindet. Wenn der äußere Endabschnitt 7 den Boden berührt, wird er nach oben gedrückt, wie die Fig.7-9 zeigen. Hierbei wird der Endabschnitt angehoben und schwenkt um die Gelenkachse des Kugelgelenk 12 nach oben, so dass die Gelenkbolzen 13.2 von den äußeren Enden des ringförmigen Elementes 13.1 der Gelenkanordnung 13 abheben und in den freien Raum des Inneren des Gelenkelementes 13.1 in Richtung nach außen sich verschieben, wie die Fig. 7-9 zeigen.

Der jeweilige Hydraulikzylinder 16 ist gemäß des Ausführungsbeispiels an dem jeweiligen Endabschnitt 7 bzw. 8 des Verteilergestänges 1 angeordnet. Der jeweilige Endabschnitt 7 bzw. 8 weist einen Untergurt 19.1 und einen Obergurt 19 auf, die durch eine Verbindungssäule 20 miteinander verbunden sind. In der Verbindungssäule 20 ist ein Durchbruch 21 angeordnet. In diesem Durchbruch 21 ist ein fest mit der Verbindungssäule 20 verbundenes Rohrstück 22 angeordnet. In dieses Rohrstück 22 ist das Zylinderrohr 16.1 des Hydraulikzylinders 16 gesteckt. An dem Zylinderrohr 16.1 ist im Ausführungsbeispiel ein kreisförmig ausgestaltetes Ansatzelement 16.1.1 angeordnet. Hierdurch ist das Zylinderrohr 16.1 des Hydraulikzylinders 16 gegenüber dem Rohrstück 22 fixiert und kann Kräfte in Richtung des dem Endabschnitt 7 bzw. 8 des Verteilergestänges 1 jeweils benachbarten Gestängeabschnittes 5 bzw. 6 des Verteilergestänges 1 übertragen.

Der Hydraulikzylinder 16 weist die Kolbenstange 16.2 auf. An dem freien Ende 16.2.1 der Kolbenstange 16.2 ist eine zumindest annähernd fluchtend in Richtung der Mittellinie der Kolbenstange 16.2 ausgerichtete Sacklochbohrung 16.2.2 angeordnet. Die Sacklochbohrung 16. 2.2 ist an ihrem Ende als zumindest annähernd kugelförmige Halbschale16.2.2.1 ausgebildet. In die Sacklochbohrung 16.2.2 ist ein Zwischenglied 16.3, welches stabförmig ausgebildet ist, eingreifend angeordnet. Das Zwischenglied 16.3 kommt mit Ihrem einen Ende an dem als kugelförmige Halbschale 16.2.2.1 ausgebildeten Ende der Sacklochbohrung 16.2 2.2 zur Anlage. Die Sacklochbohrung 16.2.2 weist einen Durchmesser 23, der in Ausführungsbeispiel größer als zumindest das 1,5 fache des Durchmessers 24 des stabförmigen Zwischengliedes 16.3 ist, auf. Somit ist das Zwischenglied 16.3 beweglich mit der Kolbenstange 16.2 verbunden. Weiterhin weist das Sackloch 16.2. 2. eine Tiefe 25 auf, die zumindest das Zweifache des Durchmessers des Zwischengliedes 16.3 beträgt. Des Weiteren ist das stabförmige Zwischenglied 16.3 auf der der Kolbenstange 16.2 abgewandten Seite mit einer Gelenkanordnung 10 war mit dem jeweiligen inneren benachbarten Seite des benachbarten Gestängeabschnitt des 5 bzw. 6 des Verteilergestänges 1 verbunden.

Gleichfalls ist selbstverständlich auch eine umgekehrte Anordnung bzw. Zuordnung des Hydraulikzylinders 16 zu dem Endabschnitt 7 bzw. 8 bzw. dem inneren benachbarten Gestängeabschnitt 5 bzw. 6 des Verteilergestänges 1 möglich, indem das Zylinderrohr des Hydraulikzylinders 16 an der Gelenkanordnung des benachbarten Gestängeabschnittes 5 bzw. 6 und das Zwischenglied an der Verbindungssäule 20 des Endabschnittes 7 bzw. 8 angreifend angeordnet ist.

## Patentansprüche

1. Verteilergestänge (1) für eine landwirtschaftliche Verteilmaschine mit mehreren zueinander in Transportstellung einklappbaren und in Arbeitsstellung ausklappbaren Gestängeabschnitten (2, 3, 4, 5, 6, 7, 8,) und mit auf jeder Seite des Verteilergestänges (1) mittels Ausweichgelenken (11) und um aufrechte Achsen gegen eine nachgebende und als eine Kolbenstange (16.2) aufweisenden Hydraulikzylinder (16) ausgebildete Sperrvorichtung und/oder Federeinrichtung in auf die Fahrtrichtung (15) bezogene Vorwärts- und/oder Rückwärtsrichtung beim Auftreffen auf Hindernissen ausweichbar angeordneten Endabschnitten (7, 8), wobei die Sperrvorichtung und/oder Federeinrichtung (16) zwischen dem jeweiligen Endabschnitt (7, 8) des Gestänges (1) und dem jeweiligen benachbarten innen liegenden Gestängeabschnitt (5, 6) angeordnet ist und die jeweiligen Endabschnitte (7,8) ausweichbar gegenüber den innen liegenden Gestängeabschnitten (5, 6) hält, **dadurch gekennzeichnet, dass** die Kolbenstange (16.2) mit dem Endabschnitt (7, 8) des Gestänges (1) oder dem benachbarten innen liegenden Gestängeabschnitt (5, 6) über ein Zwischenglied (16.3) in Wirkverbindung steht, dass das Zwischenglied (16.3) beweglich mit der Kolbenstange (16.2) in Verbindung steht.

2. Verteilergestänge nach Anspruch 1, **dadurch gekennzeichnet, dass** an dem freien Ende (16.2.1) der Kolbenstange (16.2) in der Kolbenstange (16.2) eine zumindest annähernd fluchtend in Richtung der Mittellinie der Kolbenstange (16.2) ausgerichtete Sacklochbohrung (16.2.2) angeordnet ist, dass in die Sacklochbohrung (16.2) das Zwischenglied (16.3) eingreift.

3. Verteilergestänge nach Anspruch 1, **dadurch gekennzeichnet, dass** das Zwischenglied (16.3) stabförmig ausgebildet ist.

4. Verteilergestänge nach zumindest einem der vorstehenden Ansprüche, **dadurch gekennzeichnet, dass** die Sacklochbohrung (16.2.2) einen Durchmesser (25), der größer als zumindest das 1,25 fache, vorzugsweise zumindest das 1,5 fache des Durchmessers (24) des stabförmigen Zwischengliedes (16.3) ist, aufweist.

5. Verteilergestänge nach zumindest einem der vorstehenden Ansprüche, **dadurch gekennzeichnet, dass** das Sackloch (16.2.2) eine Tiefe (25), die zumindest das Zweifache des Durchmessers (24) des Zwischengliedes (16.3) beträgt, aufweist.

6. Verteilergestänge nach zumindest einem der vorstehenden Ansprüche, **dadurch gekennzeichnet, dass** das stabförmige Zwischenglied (16.3) auf der der Kolbenstange (16.2.1) abgewandten Seite mittels einer Gelenkanordnung mit dem jeweiligen Endabschnitt (7, 8) des Gestänges (1) und dem jeweiligen benachbarten innen liegenden Gestängeabschnitt (5, 6) verbunden ist.

7. Verteilergestänge nach zumindest einem der vorstehenden Ansprüche, **dadurch gekennzeichnet, dass** der jeweilige Endabschnitt (7,8) des Gestänges (1) oder der jeweilige benachbarte innen liegende Gestängeabschnitt (5,6) einen über eine Verbindungssäule (20) miteinander verbundenen Unter- (18) und Obergurt (19) aufweist, dass in der Verbindungssäule (20) ein Durchbruch (21) angeordnet ist, dass in dem Durchbruch (21) ein mit der Verbindungssäule (20) fest verbundenes Rohrstück (42) angeordnet ist, dass in das Rohrstück (42) das Zylinderrohr (16.1) des Hydraulikzylinders (16) gesteckt und mit einem an dem Zylinderrohr (16.1) des Hydraulikzylinders (16) angeordneten Ansatzelement (16.1.1) an dem einen Ende des Rohrstückes (22) anliegt.

## Claims

1. Spray boom (1) for an agricultural distributing machine, with a plurality of boom portions (2, 3, 4, 5, 6, 7, 8) which can be folded up with respect to one another into a transport position and unfolded with respect to one another into a working position, and with end portions (7, 8) which are arranged by means of deflecting joints (11) on each side of the spray boom (1) so as to be deflectable about vertical axes counter to a yielding locking device, configured as a hydraulic cylinder (16) having a piston rod (16.2), and/or spring device in the forwards and/or rearwards direction with respect to the direction of travel (15) upon striking against obstacles, wherein the locking device and/or spring device (16) are/is arranged between the respective end portion (7, 8) of the boom (1) and the respective adjacent inner boom portion (5, 6) and hold/holds the respective end portions (7, 8) so as to be deflectable in relation to the inner boom portions (5, 6), **characterized in that** the piston rod (16.2) is operatively connected to the end portion (7, 8) of the boom (1) or the adjacent inner boom portion (5, 6) via an intermediate element (16.3), **in that** the intermediate element (16.3) is connected movably to the piston rod (16.2).

2. Spray boom according to Claim 1, **characterized in that** a blind hole bore (16.2.2) oriented at least approximately in alignment in the direction of the centre line of the piston rod (16.2) is arranged in the piston rod (16.2) at the free end (16.2.1) of the piston rod (16.2), **in that** the intermediate element (16.3) engages in the blind hole bore (16.2).

3. Spray boom according to Claim 1, **characterized in that** the intermediate element (16.3) is of rod-shaped design.

4. Spray boom according to at least one of the preceding claims, **characterized in that** the blind hole bore (16.2.2) has a diameter (25) which is greater than at least 1.25 times, preferably at least 1.5 times the diameter (24) of the rod-shaped intermediate element (16.3).

5. Spray boom according to at least one of the preceding claims, **characterized in that** the blind hole (16.2.2) has a depth (25) which is at least twice the diameter (24) of the intermediate element (16.3).

6. Spray boom according to at least one of the preceding claims, **characterized in that** the rod-shaped intermediate element (16.3) is connected by means of a joint arrangement on the side facing away from the piston rod (16.2.1) to the respective end portion (7, 8) of the boom (1) and to the respective adjacent inner boom portion (5, 6).

7. Spray boom according to at least one of the preceding claims, **characterized in that** the respective end portion (7, 8) of the boom (1) or the respective adjacent inner boom portion (5, 6) has a lower flange (18) and upper flange (19) connected to each other via a connecting column (20), **in that** an aperture (21) is arranged in the connecting column (20), **in that** a pipe segment (42) which is fixedly connected to the connecting column (20) is arranged in the aperture (21), **in that** the cylinder tube (16.1) of the hydraulic cylinder (16) is plugged into the pipe segment (42) and lies against the one end of the pipe segment (22) with an attachment element (16.1.1) arranged on the cylinder tube (16.1) of the hydraulic cylinder (16).

## Revendications

1. Rampe distributrice (1) pour une machine distributrice agricole, avec plusieurs segments de rampe (2, 3, 4, 5, 6, 7, 8,) escamotables les uns vers les autres dans la position de transport et déployables en position de travail et avec des segments d'extrémité (7, 8) placés de part et d'autre de la rampe distributrice (1) en pouvant dévier dans la direction avant et/ou arrière par rapport à la direction de marche (15), lors de l'impact sur des obstacles au moyen d'articulations de déviation (11) et autour d'axes debout contre un dispositif de blocage et/ou système de ressort conçu en tant que vérin hydraulique (16) comportant une tige de piston (16.2), le dispositif de blocage et/ou système de ressort (16) étant placé entre le segment d'extrémité (7, 8) concerné de la rampe (1) et le segment de rampe (5, 6) voisin intérieur respectif et maintenant les segments d'extrémité (7,8) concernés de manière à pouvoir dévier par rapport aux segments de rampe (5, 6) intérieurs, **caractérisée en ce que** la tige de piston (16.2) se trouve en liaison active avec le segment d'extrémité (7, 8) de la rampe (1) ou le segment de rampe (5, 6) intérieur voisin par l'intermédiaire d'un organe intermédiaire (16.3), **en ce que** l'organe intermédiaire (16.3) est en liaison mobile avec la tige de piston (16.2).

2. Rampe distributrice selon la revendication 1, **caractérisée en ce que** sur l'extrémité libre (16.2.1) de la tige de piston (16.2), dans la tige de piston (16.2) est placé un alésage borgne (16.2.2) orienté au moins approximativement en alignement dans la direction de la ligne médiane de la tige de piston (16.2), **en ce que** l'organe intermédiaire (16.3) s'engage dans l'alésage borgne (16.2).

3. Rampe distributrice selon la revendication 1, **caractérisée en ce que** l'organe intermédiaire (16.3) est conçu en forme de tige.

4. Rampe distributrice selon au moins l'une quelconque des revendications précédentes, **caractérisée en ce que** l'alésage borgne (16.2.2) présente un diamètre (25) qui est supérieur à au moins 1,25 fois, de préférence au moins 1,5 fois le diamètre (24) de l'organe intermédiaire (16.3) en forme de tige.

5. Rampe distributrice selon au moins l'une quelconque des revendications précédentes, **caractérisée en ce que** le trou borgne (16.2.2) présente une profondeur (25), qui correspond au moins au double du diamètre (24) de l'organe intermédiaire (16.3).

6. Rampe distributrice selon au moins l'une quelconque des revendications précédentes, **caractérisée en ce que** sur le côté opposé à la tige de piston (16.2.1), l'organe intermédiaire (16.3) en forme de tige est relié au moyen d'un agencement articulé avec le segment d'extrémité (7, 8) concerné de la rampe (1) et le segment de rampe (5, 6) intérieur voisin concerné.

7. Rampe distributrice selon au moins l'une quelconque des revendications précédentes, **caractérisée en ce que** le segment d'extrémité (7,8) concerné de la rampe (1) ou le segment de rampe (5,6) intérieur voisin concerné comporte une sangle inférieure (18) et une sangle supérieure (19) reliées l'une à l'autre par l'intermédiaire d'une colonne de liaison (20), **en ce que** dans la colonne de liaison (20) est placé une percée (21), **en ce que** dans la percée (21) est placée une pièce tubulaire (42) solidement reliée avec la colonne de liaison (20), **en ce que** le tube cylindrique (16.1) du vérin hydraulique (16) est enfoncé dans la pièce tubulaire (42) et par un élément de raccordement (16.1.1) placé sur le tube cylindrique (16.1) du vérin hydraulique (16) est adjacent sur l'une des extrémités de la pièce tubulaire (22).
